# EUROPEAN PATENT APPLICATION

(11) **EP 2 364 873 A1**
(43) Date of publication of application: **14.09.2011**
(21) Application number: 11156891.1
(22) Date of filing: 03.03.2011
(51) Int. Cl.: B60L 11/18, H02J 7/02

(54) **System and method for charging an energy storage system for an electric or hybrid-electric vehicle**

(30) Priority: 09.03.2010 US 720434
(71) Applicant: General Electric Company, Schenectady, NY 12345 (US)
(72) Inventor: Steigerwald, Robert Louis, Burnt Hills, NY 12027 (US); Hershey, John Erik, Niskayuna, NY 12309 (US); Hertman, Michael James, Niskayuna, NY 12309 (US); King, Robert Dean, Niskayuna, NY 12309 (US)
(74) Representative: Illingworth-Law, William Illingworth

(57) **Abstract**

A system and method for electrical charging is disclosed. The electrical charging system comprises a first charging coil and an energy storage device coupled to the first charging coil. The energy charging system further comprises an energy charging station comprising a second charging coil disposed on a movable positioner, wherein the second charging coil is coupleable to an electrical energy source, at least one drive mechanism configured to translate the movable positioned, and a system controller. The system controller is configured to detect an event indicative of a proximity of the first charging coil to the energy charging station, translate the movable positioner such that the second charging coil is substantially aligned with, and closely spaced apart from, the first charging coil to form an electrical transformer, and initiate a charging cycle configured to transfer electrical energy to the at least one energy storage device via the electrical transformer.

## Description

### BACKGROUND

Embodiments of the invention relate generally to an electrical charging system and, more particularly, to a system and method for charging an energy storage system of electric or hybrid-electric vehicle.

Electric vehicles and hybrid-electric vehicles are typically powered by one or more energy storage devices, either alone or in combination with an internal combustion engine. In pure electric vehicles, the one or more energy storage devices power the entire drive system, thereby eliminating the need for an internal combustion engine. Hybrid-electric vehicles, on the other hand, include energy storage device power to supplement power supplied by an internal combustion engine, which greatly increases the fuel efficiency of the internal combustion engine and of the vehicle.

Traditionally, the energy storage device in an electric or hybrid-electric vehicle included at least one battery capable of being charged via 120 V or 240 V power from a conventional electrical outlet. A power cord would be manually connected between the energy storage device and the electrical outlet to initiate the recharging cycle, preferably during off-peak utility hours. However, this charging technique may be quite time consuming and may, for example, require up to 12 hours to fully charge the energy storage device. Furthermore, the conductive engagement between the energy storage device and the electrical outlet tends to limit the location of charging stations, as environmental conditions such as rain, snow, and fog, etc. may reduce charging performance.

Another method of charging the energy storage device in electric or hybrid-electric vehicles is known as inductive charging. Inductive charging uses a first induction coil to create an alternating electromagnetic field from within a charging station located externally to the vehicle. This first induction coil is usually located within a "paddle" or other device to form one half of an electrical transformer. A second induction coil is located within the vehicle, and when the "paddle" or other device containing the first induction coil is placed in close proximity to the second induction coil within the vehicle, the two induction coils form an electrical transformer that transfers power via the electromagnetic field and converts it into electrical current to charge the vehicle's energy storage device. Unlike conventional conductive charging, inductive charging involves no exposed conductors, and thus environmental conditions such as rain, snow, and fog do not greatly affect the charging performance. However, the user must still manually place the two induction coils in proximity to one another. Thus, to initiate a charging cycle, the user must exit the vehicle, thereby becoming exposed to the environmental conditions.

Therefore, it is desirable to provide an electrical charging station for an electric and/or hybrid-electric vehicle having an alternative, "hands-free" mode of initiating the charging operation between the charging station and the vehicle.

### BRIEF DESCRIPTION OF THE INVENTION

Embodiments of the invention provide an electrical charging system, the electrical charging system comprising a first charging coil and at least one energy storage device coupled to the first charging coil. The energy charging system further comprises an energy charging station comprising a second charging coil disposed on a movable positioner, wherein the second charging coil is coupleable to an electrical energy source, at least one drive mechanism configured to translate the movable positioned, and a system controller. The system controller is configured to detect an event indicative of a proximity of the first charging coil to the energy charging station, translate the movable positioner such that the second charging coil is substantially aligned with, and closely spaced apart from, the first charging coil to form an electrical transformer, and initiate a charging cycle configured to transfer electrical energy to the at least one energy storage device via the electrical transformer.

In accordance with another aspect of the invention, a method of charging a vehicle is shown, the method comprising detecting a vehicle in proximity to an energy charging station, wherein the vehicle comprises a first charging coil and the energy charging station comprises a second charging coil disposed on a movable armature, and initiating a charge cycle request based on the detection of the vehicle. The method further comprises manipulating the movable armature such that the second charging coil is moved in the direction of the first charging coil, detecting a position of the first charging coil by at least one of determining a level of energy transfer between the first charging coil and the second charging coil and detecting an ultrasonic signal emitted from a location near the first charging coil. Additionally, the method comprises manipulating the movable armature to align the second charging coil with the first charging coil to form an electrical transformer, and charging an energy storage device of the vehicle by way of the electrical transformer.

In accordance with another aspect of the invention, an energy charging apparatus is described. The energy charging apparatus comprises a primary charging coil located on a movable armature, wherein the primary charging coil is electrically connected to an electrical energy source, at least one drive mechanism configured to translate the movable armature in at least two dimensions and a system controller. The system controller is configured to detect the presence of a secondary charging coil located externally to the energy charging apparatus, detect the location of the secondary charging coil, and translate the movable armature and primary charging coil in the direction of the secondary charging coil such that the primary charging coil is substantially aligned with, and closely spaced apart from, the secondary charging coil. The system controller is further configured to initiate a charging cycle to charge at least one energy storage device, wherein the at least one energy storage device is charged via at least one of an electrical transformer formed by the primary charging coil and the secondary charging coil and a conductive electrical coupler.

Various other features and advantages will be made apparent from the following detailed description and the drawings.

### BRIEF DESCRIPTION OF THE DRAWINGS

The drawings illustrate preferred embodiments presently contemplated for carrying out the invention.

In the drawings:

FIG. 1 is a cross-sectional view of an inductive charging configuration in accordance with an embodiment of the invention.

FIG. 2 is a front view of a magnetic core and charging coil in accordance with an embodiment of the invention.

FIG. 3 is a prospective view of a charging coil positioning system in accordance with an embodiment of the invention.

FIG. 4 is a schematic view of an inductive charging system in accordance with an embodiment of the invention.

FIGS. 5A-5C show a schematic view of an inductive charging system in accordance with another embodiment of the invention.

FIG. 6 is a flow diagram regarding an inductive charging method in accordance with embodiments of the invention.

### DETAILED DESCRIPTION

A system and method for electrical energy charging of an energy storage device for a vehicle or other device is shown, wherein the energy storage device is coupled to an energy charging assembly without the need for manual user application or interference.

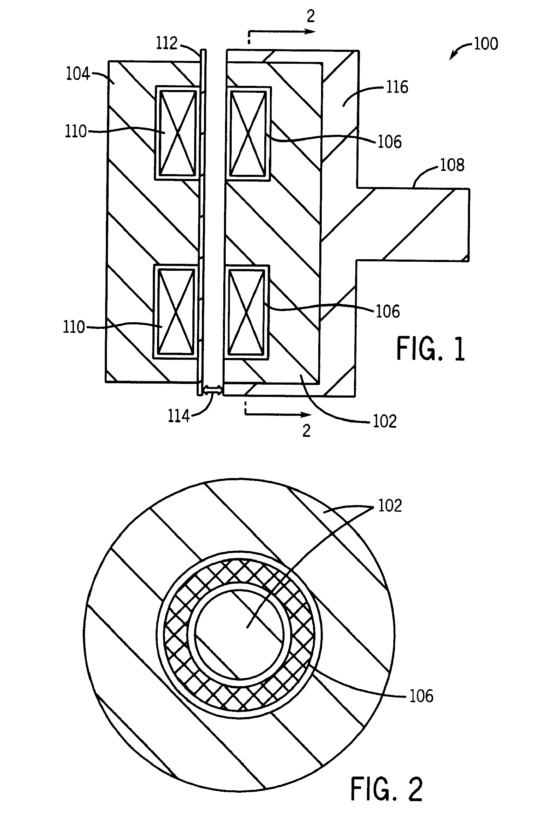

Referring to FIG. 1, a cross-sectional view of a contactor-less charging interface 100 in accordance with an embodiment of the invention is shown. Charging interface 100 comprises two magnetic cores 102, 104. Magnetic cores 102, 104 are preferably "pot core"-type structures, but other magnetic core structures may also be suitable. Magnetic core 102 comprises a charging coil 106 disposed therein, while magnetic core 104 comprises a charging coil 110 disposed therein. FIG. 2 illustrates a front view of magnetic core 102 or magnetic core 104 and respective charging coil 106, 110 along line 2-2. As can be seen in FIG. 2, charging coil 106, 110 encompasses a portion of magnetic core 102, 104 and is also surrounded by a portion of magnetic core 102, 104.

As shown in FIG. 1, magnetic core 102 and magnetic core 104 (along with their respective charging coils 106, 110) are entirely separate structures, each being retained in a different device. For example, magnetic core 102 is preferably retained in a charging assembly housing 116 that is attached to an armature 108 that is capable of being manipulated in a plurality of dimensions, as will be described in further detail below. On the other hand, magnetic core 104 is preferably retained on or within a vehicle and is protected by a thin, non-electrically-conductive barrier 112. In an exemplary embodiment of the invention, magnetic core 104 is disposed in the front bumper region of the vehicle, where it can be protected by barrier 112, barrier 112 being formed of any suitable non-electrically-conductive material (e.g., plastic). However, embodiments of the invention are not limited to such a configuration.

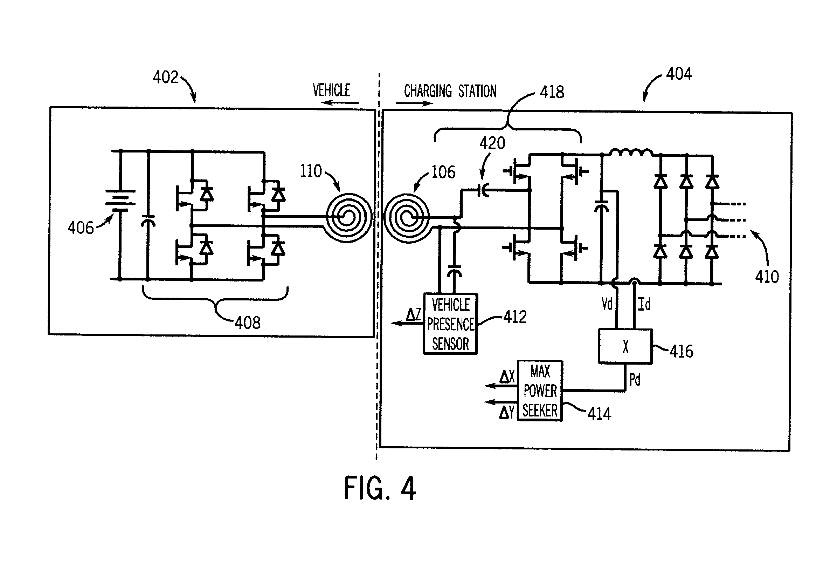

Although not shown in FIG. 1, and as discussed below in FIG. 4, both charging coil 106 and charging coil 110 are respectively coupled to at least one electrical energy source. For example, charging coil 106 may be coupled to an electrical utility grid and/or battery, while charging coil 110 may be coupled to a vehicle's energy storage system. When energized, charging coil 106 acts as a transformer primary winding, and charging coil 110 acts as a transformer secondary winding. As charging coils 106, 110 are brought into close proximity to one another such that charging coils 106, 110 are substantially aligned and separated only by an air gap 114, a relatively efficient electrical transformer results, thereby enabling contactor-less, inductive energy transfer between charging coils 106, 110. Air gap 114 is preferably small (i.e., 0.1 inches or less) so as to minimize the leakage inductance of the electrical transformer. However, it is also possible for magnetic core 102 to directly contact non-electrically-conductive barrier 112, thereby eliminating air gap 114 while still maintaining a magnetic gap between magnetic core 102 and magnetic core 104.

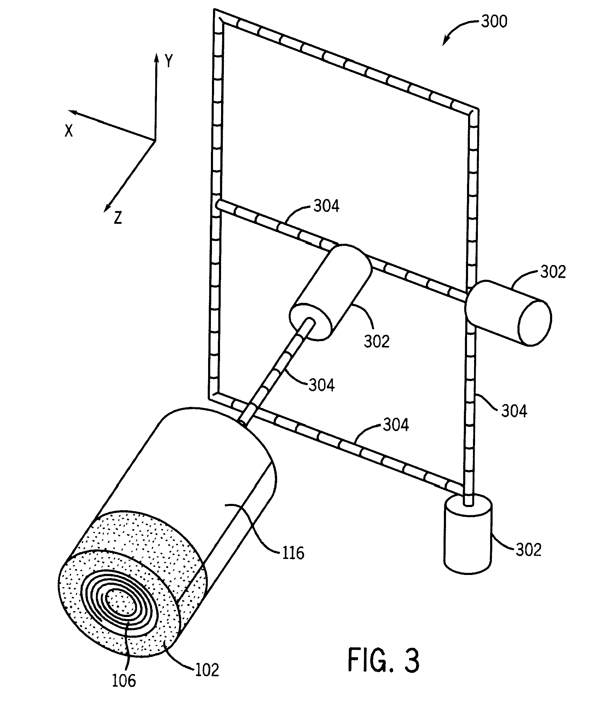

Referring to FIG. 3, a positioning device 300 in accordance with an embodiment of the invention is shown. Positioning device 300 is part of a charging station and is configured to manipulate charging assembly housing 116 in the x, y, and z-dimensions to enable positioning and alignment of magnetic core 102 and charging coil 106 with magnetic core 104 and charging coil 110 shown in FIG. 1. When a vehicle or other device is brought into immediate proximity with positioning device 300, the presence of the vehicle or other device is sensed, and charging assembly housing 116 is moved in one or more dimensions so as to substantially align charging coil 106 with charging coil 110. A plurality of stepper motors 302 and lead screws 304 may be utilized to mechanically drive charging assembly housing 116 in the x, y, and z-dimensions until charging coil 106 and charging coil 110 are substantially aligned, as shown in FIG. 1. It is to be noted that positioning device 300 is not limited to the use of stepper motors and lead screws to drive charging assembly housing 116, as any suitable controllable drive mechanism (e.g., servo motors) and structure would suffice. Furthermore, positioning device 300 is not limited to movement in the x, y, and z-dimensions, and may move in only one or two dimensions.

Turning now to FIG. 4, a detailed schematic of the energy charging system in accordance with an embodiment of the invention is shown. Referring first to vehicle 402, charging coil 110 is electrically coupled to a battery 406 via the vehicle's electronic components 408. Electrical components 408 are not limited to the configuration as shown, and can be the vehicle's existing components, such as an Energy Management System (EMS) already present in an electric or hybrid-electric vehicle. As to charging station 404, charging coil 106 is shown to be electrically coupled to an electrical energy source 410. Electrical energy source 410 can be an electrical utility grid and/or a battery. Furthermore, while a 3-phase connection to electrical energy source 410 is shown, it is to be understood that embodiments of the invention are not limited as such.

Referring still to FIG. 4, a method of initiating a charging cycle according to an embodiment of the invention will be described. First, vehicle 402 is maneuvered into a position near to charging station 404. The user of vehicle 402 then activates a switch (not shown) to excite charging coil 110 at a reduced power, thereby creating a magnetic field which emanates from charging coil 110. The magnetic field emanating from charging coil 110 is then sensed by both charging coil 106 and a vehicle presence sensor 412 at charging station 404. In one embodiment of the invention, upon detection of the magnetic field emanating from charging coil 110, charging coil 106 is also energized and translated in both the x-dimension and the y-dimension using, for example, positioning device 300 described above with respect to FIG. 3. As charging coil 106 is moved in the x-dimension and y-dimension relative to vehicle 402, a maximum power seeker 414 detects whether or not the transfer of power to vehicle 402 via charging coils 106, 110 is increasing or decreasing. If the power delivered to vehicle 402 is determined to be increasing, coil 106 is nearing alignment with coil 110 in the x- and/or y-dimension, and thus movement of coil 106 in the same direction is continued. However, if power delivered to vehicle 402 is decreasing during movement of charging coil 106, the direction of movement of charging coil 106 is reversed, as charging coils 106, 110 are moving farther apart in the x- and y-dimensions. To determine the power delivered to vehicle 402, the DC link voltage and current of charging station 404 are simply multiplied (via multiplier 416). Maximum power seeker 414 then uses the delivered power calculation from multiplier 416 to determine the location of maximum power in the x- and y-dimensions.

While charging coil 106 is translated in the x- and y-dimensions, charging coil 106 is also simultaneously translated in the z-dimension (that is, in the direction of vehicle 402 and charging coil 110). The power transfer between charging coils 106, 110 grows as charging coil 106 approaches vehicle 402 in the z-dimension, and thus the position at which charging coil 106 and charging coil 110 are closest to one another (without physical contact) is inherently the position of maximum power transfer in the z-dimension. When it is detected that charging coil 106 is suitably spaced apart from charging coil 110 in the z-dimension, and charging coils 106, 110 are sufficiently aligned in the x- and y-dimensions, the translation of charging coil 106 stops, and a charging cycle is initiated, thereby inductively transferring electrical energy to battery 406 via the electrical transformer formed by energized charging coils 106, 110.

Using the above approach, very little power is drawn from the vehicle's battery 406 during the period in which alignment of charging coil 106 with charging coil 110 is being sought. Instead, the high power available from electrical energy source 410 is used to generate a relatively large signal in charging coil 106, thereby allowing automatic alignment between charging coils 106, 110 to be achieved without further depleting battery 406.

In an alternative method for achieving alignment between charging coils 106, 110 and initiating a charging cycle, it is also possible to utilize vehicle presence sensor 412 to determine alignment between charging coils 106, 110. That is, as charging coil 106 is alternately translated in both the x- and y-dimensions, vehicle presence sensor 412 senses the magnetic field emitted by charging coil 110. If a signal generated by vehicle presence sensor 412 in response to the sensed magnetic field is increasing, translation of charging coil 106 in the x- and y-dimensions in that particular direction is continued. However, if the signal generated by vehicle presence sensor 412 is decreasing, the direction of translation of charging coil 106 is reversed, as central alignment in the x- and y-dimensions is not being achieved. As the position of charging coil 106 in the x- and y-dimensions is being adjusted, charging coil 106 is concurrently translated in the z-dimension (that is, in the direction of the vehicle and charging coil 110). As stated above, the maximum power transfer position in the z-dimension is inherently the position at which charging coil 106 and charging coil 110 are closest to one another. Thus, when the position of maximum signal generation by vehicle presence sensor 412 is determined (signifying x- and y-dimension alignment) and charging coil 106 meets vehicle 402 (signifying sufficient z-dimension alignment), the translation of charging coil 106 stops and a charging cycle is initiated, thereby inductively transferring electrical energy to battery 406 via the electrical transformer formed by energized charging coils 106, 110.

Referring still to FIG. 4, although charging coils 106, 110 are brought into close proximity with one another via one of the methods described above so as to initiate a charging cycle, leakage inductance between charging coils 106, 110 may still be relatively large. As such, charging station 404 further employs a resonant power converter 418. Resonant power converter 418 comprises a resonant capacitor 420, which is resonated with the transformer leakage inductance. This configuration enables reduced volt-amp rating of the charging circuitry, and also enables low-loss, soft switching of the semiconductors of resonant power converter 418 to be achieved, thereby mitigating the effects of the leakage inductance between charging coils 106, 110.

While the above methods of translating charging coil 106 of charging station 404 pertain to translation in three dimensions (x, y, and z), embodiments of the invention are not limited to such a configuration. For example, as discussed above, charging coil 110 is preferably located within a bumper region of vehicle 402, but charging coil 110 may be located in an alternative region of vehicle 402 (i.e., a roof structure). If the location of charging coil 106 within a bumper or alternative region is generally consistent throughout a particular class or make of vehicle, changing the elevation or location of charging coil in the x-dimension or y-dimension may be unnecessary, and thus charging station 404 may only be configured to translate charging coil 106 in two dimensions, i.e., the x- and z-dimensions, or y- and z-dimensions. The vehicle's bumper or alternate structure itself could also be used to guide charging coil 106 into the proper elevation or location relative to charging coil 110. For example, a contour could be added to the housing component of charging coil 106 to guide the housing component of charging coil 106 along a sloping surface of the vehicle's bumper or alternate structure until charging coil 106 is aligned with charging coil 110 in the x-dimension or y- dimension. Furthermore, in the event that a vehicle (or fleet of vehicles) to be charged does not belong to the particular class or make for which charging station 404 is configured, adjustments or replacements of the translatable components of charging station 404 can be made to alter the y-dimension elevation setting of charging coil 106.

It is also possible for the translation of charging coil 106 to be limited to only the z-dimension. That is, vehicle 402 may be guided into a particular parking position via channels or small guide strips on either side of the vehicle's tires as well as adjustable guide strips in front of and behind the vehicle's tires, thereby substantially limiting the possible deviation of vehicle 402 in the x-dimension. A contoured housing component of charging coil 106, along with the surface of the vehicle's bumper or alternative structure, could then be used further align charging coil 106 with charging coil 110 in the x-dimension (as well as the y-dimension, as discussed above). Thus, only translation of charging coil 106 in the z-dimension would be necessary, further simplifying the components of charging station 404. Translation in the z-dimension could be even further simplified by using a spring-and-damper arrangement, where the vehicle's user would activate a switch from within the vehicle to initiate translation of charging coil 106 in the z-dimension, wherein the vehicle's bumper or alternative structure simply guides charging coil 106 in the x- and/or y-dimensions until proper alignment between charging coil 106 and charging coil 110 is achieved. Translation of charging coil 106 in the z-dimension could be stopped by a mechanical switch, which measures resisting force, or by a limit switch with a protruding pin that indicates close proximity of charging coil 106 with the vehicle's bumper and, consequently, charging coil 110. Alternatively, an electronic sensing device, such as an ultrasonic sensor, could also be used to stop translation of charging coil 106 in the z-dimension when charging coil 106 is sufficiently near to charging coil 110 to form an efficient electronic transformer.

In any of the above embodiments regarding the alignment of charging coil 106 with charging coil 110 for charging purposes, it may be further advantageous to include an electromagnetic or mechanical locking device to constrain the placement of charging coil 106 with respect to charging coil 110 such that an acceptable air gap is maintained between charging coils 106, 110 before a charging cycle is initiated and/or during the charging cycle itself. Furthermore, it may also be advantageous for charging station 404 to also receive a control input that confirms that the air gap between charging coils 106, 110 is within acceptable limits, that charging coil 106 is correctly positioned with respect to charging coil 110, and that no other faults are present in the charging system or utility grid. A visual or audible indication from either vehicle 402 or charging station 404 is presented to the user if any such fault is detected. Additionally, if a fault is detected, the charging cycle could be terminated by charging station 404, and a fault code can be communicated to the user, identifying the faulty vehicle and/or charging station components.

In addition to their use for inductive charging of the energy storage device of vehicle 402, charging coils 106, 110 may also be used for information communication between vehicle 402 and charging station 404. Such communications may regard the state-of-charge of battery 406, billing information, or other related information. A modulated frequency (or frequencies) between the harmonics of the charging current may be used to communicate information between charging coils 106, 110. Simple filtering techniques could provide isolation to protect the communication signals from interference from the charge current and its harmonics. Information could also be communicated through charging coils 106, 110 using modulated signals at frequencies considerably higher than the power switching frequency and not at the harmonic of the switching frequency, wherein the power switching frequency is expected to be in the range of 20 kHz to 100 kHz, thus providing additional benefit of substantially reducing audible noise in the power electronics and associated electrical components during charging operation. In this way, not only is contactor-less charging between charging station 404 and vehicle 402 possible, but contactor-less communication between charging station 404 and vehicle 402 is possible, too.

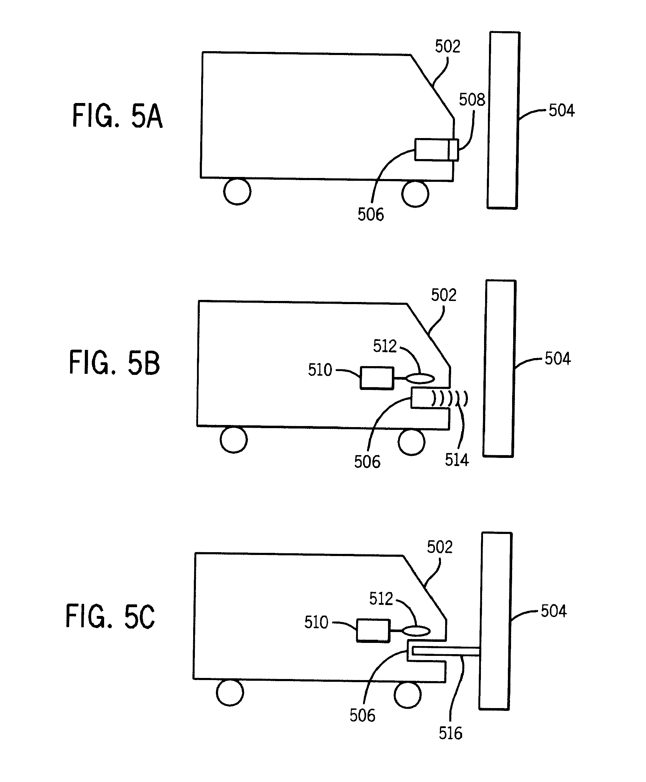

Next, considering FIGS. 5A-5C, another embodiment is shown. FIG. 5A shows an electric or hybrid-electric vehicle 502 parked in the near vicinity of a charging station 504. Vehicle 502 has a receptacle recess 506 disposed therein, preferably on (but not limited to) the front end of vehicle 502. Receptacle recess 506 is enclosed by a receptacle door 508. FIG. 5B illustrates that vehicle 502 further comprises a rechargeable battery 510 coupled to an inductive charge coupling device 512. Inductive charge coupling device 512 comprises a charging coil such as charging coil 110 described above with respect to FIGS. 1 and 4, wherein the charging coil of inductive charge coupling device 512 is disposed directly adjacent to receptacle recess 506. When receptacle door 508 of vehicle 502 is opened, an ultrasonic signal 514 is emitted from receptacle recess 506. A sensor on charging station 504 detects ultrasonic signal 514 from receptacle recess 506 and initiates a charging sequence. That is, upon detection of ultrasonic signal 514, charging station 504 deploys a recharging interface 516, as is illustrated in FIG. 5C. Recharging interface 516 preferably comprises an armature translatable in the x-, y-, and z-dimensions, but is not limited as such. Recharging interface 516 also comprises a charging coil disposed therein such as charging coil 106 described above with respect to FIGS. 1 and 4.

Upon detection of ultrasonic signal 514, recharging interface 516 is automatically maneuvered by charging station 504 to be positioned within receptacle recess 506. This guidance and positioning may be performed using an ultrasonic receiver disposed on recharging interface 516, which detects ultrasonic signal 514. Charging station 504 controls movement of recharging interface 516 until the charging coil disposed within recharging interface 516 is substantially aligned with, and appropriately spaced from, the charging coil within inductive charge coupling device 512. When such alignment is detected, a charging cycle is initiated, and inductive charging of rechargeable battery 510 begins. When charging of rechargeable battery 510 is complete, recharging interface 516 is automatically removed from receptacle recess 506, receptacle door 508 is closed, and the charging sequence is ended.

As an alternative to guiding the charging coil of recharging interface 516 into proximity with the charging coil of inductive charge coupling device 512 via detected ultrasonic signal 514, it is also possible to guide the respective charging coils into relative alignment by measuring the inductive coupling of a low-level test charging signal, similar to that which is described above with respect to FIG. 4. Furthermore, the relative positions of the charging coil of recharging interface 516 and the charging coil of inductive charge coupling device 512 can be maintained during the charging cycle by a mutual magnetic coupling force created during charging.

While not shown in FIGS. 5A-5C, it is also possible for a display to be presented to the user, the display being disposed either within vehicle 502 or on charging station 504. The display can instruct the user how to position vehicle 502 during final parking operations or can visually display the amount of charge required, charging rates, charging time, etc. After vehicle 502 is parked and the appropriate coupling of inductive charge coupling device 512 and recharging interface 516 is achieved, the user can enable a negotiation protocol, wherein the user may specify the charging cycle based upon the time parked at charging station 504, the amount of charge required for rechargeable battery 510, a charging schedule, and/or charging rates. Additionally, a method of payment may also be agreed upon as part of the negotiation protocol.

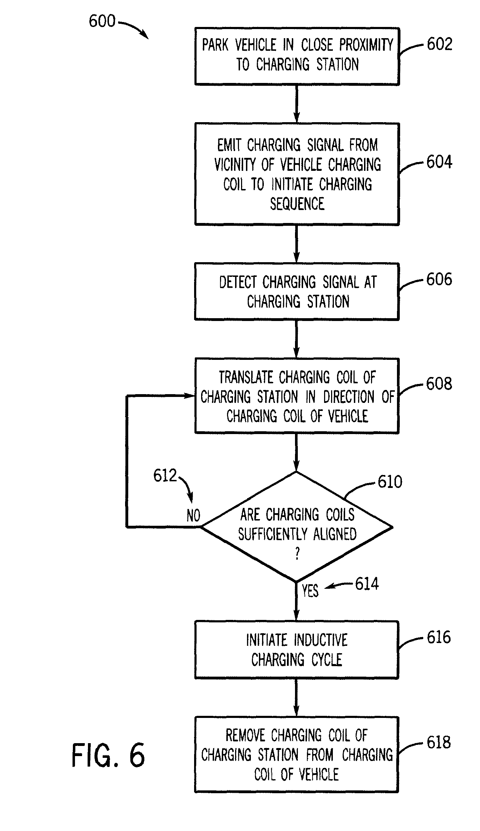

Next, referring to FIG. 6, a charging method 600 for inductive charging of an electric or hybrid-electric vehicle in accordance with an embodiment of the invention is illustrated. At block 602, an electric or hybrid-electric vehicle is parked in close proximity to a charging station, preferably within several feet of the charging station. At block 604, a charging signal is emitted from the vicinity of the vehicle's inductive charging coil, thereby initiating a charging sequence. The charging signal can be emitted by energizing the vehicle's inductive charging coil, resulting in a detectable magnetic field, or by way of an ultrasonic signal emitted from the vicinity of the vehicle's inductive charging coil. At block 606, a charging station detects the emitted charging signal, and at step 608, the charging station translates a secondary charging coil in the direction of the vehicle's (primary) charging coil based on the emitted charging signal. At block 610, a determination is made whether the respective charging coils are sufficiently aligned to create an efficient electrical transformer for the transfer of electrical energy between the charging station and the vehicle. If alignment is not sufficient 612, step 608 is repeated to further translate the secondary charging coil. If alignment is sufficient 614, an inductive charging cycle is initiated at block 616. Upon completion of the inductive charging cycle, the secondary charging coil of the charging station is removed from the primary charging coil of the vehicle at block 618, and charging method 600 is completed.

In view of the above embodiments, an efficient inductive charging system for electric or hybrid-electric vehicles is disclosed, wherein the charging system allows the user to remain within the vehicle at all times during a charging cycle, thus simplifying the charging process and protecting the user from possible unpleasant environmental conditions.

While the above embodiments are related solely to contactor-less inductive charging using separate charging coils, embodiments of the invention are not limited as such. That is, the above-described location and alignment methods could also be utilized with a conventional "plug-in" or "conductive"-type electrical coupler. A charging station's recharging interface may have a conventional conductive electrical plug disposed thereon, which is automatically positioned and inserted into a conventional plug-in or conductive interface receptacle located on or within the vehicle by way of one of the positioning methods described above. More specifically, the respective charging coils may be utilized to achieve proper alignment between the charging station's recharging interface and the vehicle's recharging interface, but the actual power transfer occurs via a conductive electrical coupling as opposed to an inductive electrical coupling. High-power electrical transfer can be provided through such conductive electrical coupling via electrical contacts, while the electrical transformer formed by the respective charging coils can still be used for low-power communication and alignment control. Using such a configuration, high-power charging (i.e., rapid charging) is possible, and electrical energy can be transferred at high efficiency and with reduced electrical loss.

Furthermore, the conductive (i.e., plug-in) interface may also be used solely for communication purposes between the charging station and the vehicle, such as the communication of the amount of charge required, charging rates, charging time, etc. Thus, at least one of inductive charging (via the electrical transformer) and conductive charging (utilizing a conventional plug-in interface) may still occur, but inductive communication of relevant charging information is avoided.

Thus, in accordance with an aspect of the invention, an electrical charging system is shown, the electrical charging system comprising a first charging coil and at least one energy storage device coupled to the first charging coil. The energy charging system further comprises an energy charging station comprising a second charging coil disposed on a movable positioner, wherein the second charging coil is coupleable to an electrical energy source, at least one drive mechanism configured to translate the movable positioned, and a system controller. The system controller is configured to detect an event indicative of a proximity of the first charging coil to the energy charging station, translate the movable positioner such that the second charging coil is substantially aligned with, and closely spaced apart from, the first charging coil to form an electrical transformer, and initiate a charging cycle configured to transfer electrical energy to the at least one energy storage device via the electrical transformer

In accordance with another aspect of the invention, a method of charging a vehicle is shown, the method comprising detecting a vehicle in proximity to an energy charging station, wherein the vehicle comprises a first charging coil and the energy charging station comprises a second charging coil disposed on a movable armature, and initiating a charge cycle request based on the detection of the vehicle. The method further comprises manipulating the movable armature such that the second charging coil is moved in the direction of the first charging coil, detecting a position of the first charging coil by at least one of determining a level of energy transfer between the first charging coil and the second charging coil and detecting an ultrasonic signal emitted from a location near the first charging coil. Additionally, the method comprises manipulating the movable armature to align the second charging coil with the first charging coil to form an electrical transformer, and charging an energy storage device of the vehicle by way of the electrical transformer.

In accordance with another aspect of the invention, an energy charging apparatus is described. The energy charging apparatus comprises a primary charging coil located on a movable armature, wherein the primary charging coil is electrically connected to an electrical energy source, at least one drive mechanism configured to translate the movable armature in at least two dimensions and a system controller. The system controller is configured to detect the presence of a secondary charging coil located externally to the energy charging apparatus, detect the location of the secondary charging coil, and translate the movable armature and primary charging coil in the direction of the secondary charging coil such that the primary charging coil is substantially aligned with, and closely spaced apart from, the secondary charging coil. The system controller is further configured to initiate a charging cycle to charge at least one energy storage device, wherein the at least one energy storage device is charged via at least one of an electrical transformer formed by the primary charging coil and the secondary charging coil and a conductive electrical coupler.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:

Various aspects and embodiments of the present invention are defined by the following numbered clauses:
1. An electrical charging system comprising:
   a first charging coil;
   at least one energy storage device coupled to the first charging coil;
   an energy charging station comprising:
      a second charging coil disposed on a movable positioner, wherein the second charging coil is coupleable to an electrical energy source;
      at least one drive mechanism configured to translate the movable positioner; and
      a system controller configured to:
   detect an event indicative of a proximity of the first charging coil to the energy charging station;
   translate the movable positioner such that the second charging coil is substantially aligned with, and closely spaced apart from, the first charging coil to form an electrical transformer; and
   initiate a charging cycle configured to transfer electrical energy to the at least one energy storage device via the electrical transformer.
2. The energy charging system of clause 1, wherein the system controller, in being configured to translate the movable positioner, is configured to:
   detect a level of energy transfer between the first charging coil and second charging coil; and
   translate the movable positioner in accordance with a detected level of energy transfer between the first charging coil and the second charging coil.
3. The energy charging system of clause 1 or clause 2, wherein the system controller, in being configured to translate the movable position, is configured to:
   detect an ultrasonic signal emitted from a location near the first charging coil; and
   translate the movable positioner in accordance with the detected ultrasonic signal.
4. The energy charging system of any preceding clause, wherein the system controller is further configured to translate the movable positioner such that an air gap is maintained between the first charging coil and the second charging coil during the charging cycle.
5. The energy charging system of any preceding clause, wherein the first charging coil is located within a vehicle, the vehicle being one of an electric and hybrid-electric vehicle.
6. The energy charging system of clause 5, wherein the vehicle further comprises a receptacle recess, wherein the receptacle recess is configured to accept the movable positioner and the second charging coil therein.
7. The energy charging system of any preceding clause, wherein the at least one drive mechanism is configured to translate the movable positioner along at least two dimensions.
8. The energy charging system of any preceding clause, further comprising a connector configured to couple the second charging coil to the electrical energy source, wherein the electrical energy source comprises one of a utility grid and a battery.
9. The energy charging system of any preceding clause, wherein the energy charging station further comprises a resonant power converter to compensate for electrical transformer leakage inductance.
10. The energy charging system of any preceding clause, wherein the energy charging station further comprises at least one of a visual and audible indicator to provide verification that the first charging coil and second charging coil are correctly positioned and that a charging cycle is able to be initiated.
11. The energy charging system of any preceding clause, wherein the system controller is further configured to communicate information between the first charging coil and the second charging coil using a modulated frequency between the harmonics of a charging current.
12. A method of charging a vehicle, the method comprising:
   detecting a vehicle in proximity to an energy charging station, wherein the vehicle comprises a first charging coil and the energy charging station comprises a second charging coil disposed on a movable armature;
   initiating a charge cycle request based on the detection of the vehicle;
   manipulating the movable armature such that the second charging coil is moved in the direction of the first charging coil;
   detecting a position of the first charging coil by at least one of:
      determining a level of energy transfer between the first charging coil and the second charging coil; and
      detecting an ultrasonic signal emitted from a location near the first charging coil;
      manipulating the movable armature to align the second charging coil with the first charging coil to form an electrical transformer; and
      charging an energy storage device of the vehicle by way of the electrical transformer.
13. The method of clause 12, further comprising controlling the movable armature to maintain an air gap between the first charging coil and the second charging coil when the first charging coil and second charging coil are aligned to form an electrical transformer.
14. The method of clause 12 or clause 13, further comprising detecting any misalignment between the first charging coil and the second charging coil and communicating a fault indication to a user if misalignment is detected.
15. The method of any of clauses 12 to 14, further comprising positioning the movable armature and the second charging coil within a receptacle recess of the vehicle, wherein the first charging coil is disposed in the receptacle recess.
16. An energy charging apparatus comprising:
   a primary charging coil located on a movable armature, wherein the primary charging coil is electrically connected to an electrical energy source;
   at least one drive mechanism configured to translate the movable armature in at least two dimensions; and
   a system controller configured to:
      detect the presence of a secondary charging coil located externally to the energy charging apparatus;
      detect the location of the secondary charging coil;
      translate the movable armature and primary charging coil in the direction of the secondary charging coil such that the primary charging coil is substantially aligned with, and closely spaced apart from, the secondary charging coil; and
      initiate a charging cycle to charge at least one energy storage device, wherein the at least one energy storage device is charged via at least one of an electrical transformer formed by the primary charging coil and the secondary charging coil and a conductive electrical coupler.
17. The energy charging apparatus of clause 16, wherein the system controller is configured to translate the movable armature based on a detected level of energy transfer between the primary charging coil and the secondary charging coil.
18. The energy charging apparatus of clause 16 or clause 17, wherein the system controller is further configured to translate the movable armature based on a detected ultrasonic signal emitted at or near the location of the secondary charging coil.
19. The energy charging apparatus of any of clauses 16 to 18, wherein the system controller is configured to maintain the position of the movable armature such that the primary charging coil and the secondary charging coil are separated by an air gap during the charging cycle.
20. The energy charging apparatus of any of clauses 16 to 19, further comprising a resonant power converter coupled to the primary charging coil and configured to compensate for electrical transformer leakage inductance.
21. The energy charging apparatus of any of clauses 16 to 20, further comprising a connector configured to couple the primary charging coil to the electrical energy source, wherein the electrical energy source comprises one of a utility grid and a battery.
22. The energy charging apparatus of any of clauses 16 to 21, wherein the conductive electrical coupler comprises a plug-in interface.

## Claims

1. An electrical charging system comprising:
a first charging coil (110);
at least one energy storage device (406) coupled to the first charging coil (110);
an energy charging station (404) comprising:
a second charging coil (106) disposed on a movable positioner (108), wherein the second charging coil (106) is coupleable to an electrical energy source (410);
at least one drive mechanism (302) configured to translate the movable positioner (108); and
a system controller configured to:
detect an event indicative of a proximity of the first charging coil (110) to the energy charging station (404);
translate the movable positioned (108) such that the second charging coil (106) is substantially aligned with, and closely spaced apart from, the first charging coil (110) to form an electrical transformer; and
initiate a charging cycle configured to transfer electrical energy to the at least one energy storage device (406) via the electrical transformer.

2. The energy charging system of claim 1, wherein the system controller, in being configured to translate the movable positioner (108), is configured to:
detect a level of energy transfer between the first charging coil (110) and second charging coil (106); and
translate the movable positioner (108) in accordance with a detected level of energy transfer between the first charging coil (110) and the second charging coil (106).

3. The energy charging system of claim 1 or claim 2, wherein the system controller, in being configured to translate the movable positioner, is configured to:
detect an ultrasonic signal emitted from a location near the first charging coil (110); and
translate the movable positioner (108) in accordance with the detected ultrasonic signal.

4. The energy charging system of any preceding claim, wherein the system controller is further configured to translate the movable positioner (108) such that an air gap (114) is maintained between the first charging coil (110) and the second charging coil (106) during the charging cycle.

5. The energy charging system of any preceding claim, wherein the first charging coil (110) is located within a vehicle (402, 502), the vehicle (402, 502) being one of an electric and hybrid-electric vehicle.

6. The energy charging system of claim 5, wherein the vehicle (402, 502) further comprises a receptacle recess (506), wherein the receptacle recess (506) is configured to accept the movable positioned (108, 516) and the second charging coil (106) therein.

7. The energy charging system of any preceding claim, wherein the at least one drive mechanism (302) is configured to translate the movable positioned (108) along at least two dimensions.

8. The energy charging system of any preceding claim, further comprising a connector configured to couple the second charging coil (106) to the electrical energy source (410), wherein the electrical energy source (410) comprises one of a utility grid and a battery.

9. The energy charging system of any preceding claim, wherein the energy charging station (404) further comprises a resonant power converter (418) to compensate for electrical transformer leakage inductance.

10. The energy charging system of any preceding claim, wherein the system controller is further configured to communicate information between the first charging coil (110) and the second charging coil (106) using a modulated frequency between the harmonics of a charging current.

11. A method of charging a vehicle, the method comprising:
detecting a vehicle in proximity to an energy charging station, wherein the vehicle comprises a first charging coil and the energy charging station comprises a second charging coil disposed on a movable armature;
initiating a charge cycle request based on the detection of the vehicle;
manipulating the movable armature such that the second charging coil is moved in the direction of the first charging coil;
detecting a position of the first charging coil by at least one of:
determining a level of energy transfer between the first charging coil and the second charging coil; and
detecting an ultrasonic signal emitted from a location near the first charging coil;
manipulating the movable armature to align the second charging coil with the first charging coil to form an electrical transformer; and
charging an energy storage device of the vehicle by way of the electrical transformer.

12. The method of claim 11, further comprising controlling the movable armature to maintain an air gap between the first charging coil and the second charging coil when the first charging coil and second charging coil are aligned to form an electrical transformer.

13. The method of claim 11 or claim 12, further comprising detecting any misalignment between the first charging coil and the second charging coil and communicating a fault indication to a user if misalignment is detected.

14. The method of any of claims 11 to 13, further comprising positioning the movable armature and the second charging coil within a receptacle recess of the vehicle, wherein the first charging coil is disposed in the receptacle recess.

15. An energy charging apparatus comprising:
a primary charging coil located on a movable armature, wherein the primary charging coil is electrically connected to an electrical energy source;
at least one drive mechanism configured to translate the movable armature in at least two dimensions; and
a system controller configured to:
detect the presence of a secondary charging coil located externally to the energy charging apparatus;
detect the location of the secondary charging coil;
translate the movable armature and primary charging coil in the direction of the secondary charging coil such that the primary charging coil is substantially aligned with, and closely spaced apart from, the secondary charging coil; and
initiate a charging cycle to charge at least one energy storage device, wherein the at least one energy storage device is charged via at least one of an electrical transformer formed by the primary charging coil and the secondary charging coil and a conductive electrical coupler.
